# EUROPEAN PATENT APPLICATION

(11) **EP 4 321 904 A1**
(43) Date of publication of application: **14.02.2024**
(21) Application number: 21935875.1
(22) Date of filing: 15.12.2021
(51) Int. Cl.: G01S 17/48, G01S 7/484, G01S 7/4865, G01S 7/487

(54) **LASER RADAR AND DISTANCE MEASURING METHOD**

(30) Priority: 07.04.2021 CN 202110373632; 07.04.2021 CN 202120703678 U
(71) Applicant: Hesai Technology Co., Ltd., Shanghai 201821 (CN)
(72) Inventor: YANG, Jin, Shanghai 201821 (CN); GU, Tianchang, Shanghai 201821 (CN); WANG, Chongyang, Shanghai 201821 (CN); XIANG, Shaoqing, Shanghai 201821 (CN)
(74) Representative: Fish & Richardson P.C.
(86) International application number: PCT/CN2021/138331
(87) International publication number: WO 2022/213659

(57) **Abstract**

A laser radar and a distance measuring method. The laser radar comprises: a laser emitting device (11), a control device (12), a detection device (13) and a data processing device (14), the control device (12) is configured to be capable of generating a trigger signal on the basis of a time sequence random number; the laser emitting device (11) comprises at least one laser (111) and a driver (112) coupled to the laser (111), the driver (112) is configured to drive, according to the trigger signal, the laser (111) to emit a laser pulse signal; the detection device (13) is configured to receive an echo signal after the laser pulse signal is reflected by a target object, and convert the echo signal into an electrical signal; and the data processing device (14) determines distance information of the target object on the basis of the time when emitting the laser pulse signal and the time when receiving the echo signal. The laser radar uses the solution of random light emission, such that interference points which interfere with the laser radar do not have a spatial correlation; and the time sequence and amplitude of multiple pulses are then modulated by using multi-pulse coding, so as to determine whether an echo code is the same as an emitted pulse sequence code and identify an echo signal, thereby further improving the anti-interference effect.

## Description

### TECHNICAL FIELD

The present disclosure relates to the field of photoelectric detection, especially to a LiDAR (Light Detection and Ranging) and a ranging method.

### BACKGROUND

In the point cloud generated by a LiDAR, the presence of interference points is consistently a challenge that needs to be overcome as much as possible. There are many factors contributing to the occurrence of interference points, and crosstalk among different LiDARs stands out as a significant one, especially when LiDARs are widely applied in the navigation of autonomous vehicles, the problem about crosstalk among LiDARs is especially prominent. The detection light of a LiDAR is concentrated in a few commonly used wavelengths, and it's easy for the LiDAR to receive lasers or echoes of the same wavelength emitted by other LiDARs, which cannot be filtered out by light filtering or other methods. Since the ranging principle of a LiDAR is based on measurement of the time of flight (TOF) of an emitted laser pulse, if each LiDAR is unable to determine whether a received laser pulse is emitted by the LiDAR, then when receiving the pulse or echo sent by other LIDAR, it may be determined to be an echo signal of itself, causing a presence of interference points and even incorrect detection results.

The content in the BACKGROUND merely involves the technology known to the discloser, and does not necessarily represent the existing technology in the field.

### SUMMARY

In view of at least one drawback in the existing technology, the present disclosure designs a LiDAR, which adopts a solution of random light emission, so that interference points interfering with the LiDAR do not have spatial correlation, and then a multi-pulse coding is combined to modulate the time sequence and the amplitude of multiple pulses, echo signals can be identified by determining whether the coding of the echo is the same as the coding of the transmitted pulse sequence, thereby further improving the anti-interference effect.

The present disclosure provides a LiDAR, comprising: a laser emitting device, a control device, a detection device and a data processing device, the control device is configured to generate a trigger signal based on a time sequence random number; the laser emitting device comprises at least one laser and a driver coupled with the laser, the driver is configured to drive the laser to emit a laser pulse signal according to the trigger signal; the detection device is configured to receive an echo signal of the laser pulse signal reflected by an object and convert the echo signal into an electrical signal; and the data processing device is configured to determine distance information of the object based on an emission time of the laser pulse signal and a reception time of the echo signal.

According to an aspect of the present disclosure, the LiDAR further comprises a random number generator configured to generate the time sequence random number, the control device is coupled to the random number generator to receive the time sequence random number.

According to an aspect of the present disclosure, the data processing device is configured to calculate a correlation of a plurality of distance information and to filter out distance information with a correlation lower than a predetermined value as an interference signal.

According to an aspect of the present disclosure, the laser has a plurality of predetermined light emitting times, and the control device is configured to select, according to the time sequence random number, one light emitting time from the plurality of predetermined light emitting times as a trigger time for the drive signal.

According to an aspect of the present disclosure, the laser has one predetermined light emitting time, and the control device is configured to delay or advance, according to the time sequence random number, the predetermined light emitting time as a trigger time for the drive signal.

According to an aspect of the present disclosure, the laser is configured to emit a plurality of pulses, and the control device is configured to adjust, according to the time sequence random number, a time interval between trigger signals corresponding to two adjacent pulses.

According to an aspect of the present disclosure, the laser emitting device includes a plurality of lasers and a plurality of drivers, a number of the plurality of lasers is equal to a number of the plurality of drivers, and the LiDAR includes a plurality of random number generators, and a number of the plurality of random number generators is equal to the number of the plurality of lasers.

According to an aspect of the present disclosure, the laser emitting device comprises a plurality of lasers and a plurality of drivers each coupled with a respective laser, the control device is coupled with the plurality of drivers, and the time sequence random number correspond to a light emitting sequence of the plurality of lasers.

According to an aspect of the present disclosure, the laser emitting device comprises multiple groups of lasers, each group of lasers comprising a plurality of lasers and a plurality of drivers each coupled with a respective laser, and the LiDAR further comprises a plurality of random number generators corresponding to the multiple groups of lasers. For each random number generator, time sequence random number generated by the random number generator correspond to a light emitting sequence of a group of lasers corresponding to the random number generator.

According to an aspect of the present disclosure, the control device is further configured to control the driver to drive the laser to emit a laser pulse sequence with a multi-pulse coding, the multi-pulse coding comprising time sequence coding, amplitude coding, and/or pulse width coding.

According to an aspect of the present disclosure, the random number generator is a pseudorandom number generator, and generates the time sequence random number by one or more of the following ways:
random sampling from a pre-stored random number table;
generation based on a clock phase;
generation based on a system temperature; and
generation based on a linear feedback shift register.

The present disclosure also provides a ranging method comprising:
S101: generating a time sequence random number;
S102: controlling, based on the time sequence random number, at least one driver of a laser emitting device to drive a coupled laser to emit a laser pulse signal;
S103: receiving an echo signal of the laser pulse signal reflected by an object; and
S104: determining distance information of the object based on an emission time of the laser pulse signal and a reception time of the echo signal.

According to an aspect of the present disclosure, the ranging method further comprises: calculating correlation of a plurality of distance information, and determining distance information with correlation lower than a predetermined value as an interference signal.

According to an aspect of the present disclosure, the step S102 comprises: controlling the emission time of the laser pulse signal emitted by the laser, and/or controlling a time interval between adjacent laser pulses, based on the time sequence random number.

According to an aspect of the present disclosure, the step S102 comprises: controlling a light emitting sequence of a plurality of lasers based on the time sequence random number.

According to an aspect of the present disclosure, the step S102 comprises: generating a time sequence random number by one or more of the following ways:
random sampling from a pre-stored random number table;
generation based on a clock phase;
generation based on a system temperature; and
generation based on a linear feedback shift register.

The present disclosure also provides a LiDAR, comprising a laser emitting device, a control device, a detection device, and a data processing device, the control device is configured to generate a trigger signal based on a time sequence random number; the laser emitting device comprises at least one laser and a driver coupled with the laser, the driver is configured to drive the laser to emit a laser pulse signal according to the trigger signal; the detection device is configured to receive an echo signal of the laser pulse signal reflected by an object, and convert the echo signal into an electrical signal; and the data processing device determines distance information of the object based on an emission time of the laser pulse signal and a reception time of the echo signal, the laser pulse signal is a laser pulse sequence with a multi-pulse coding, the multi-pulse coding comprising time sequence coding, amplitude coding, and/or pulse width coding.

Through random light emission from a laser, interference points interfering with the LiDAR are spatially uncorrelated, and can therefore be determined as isolated points and filtered out, and the interference points are reduced. Still further, the time sequence interval and amplitude of multiple pulses are modulated in combination with the multi-pulse coding, and echo signals can be identified by determining whether the coding of the echo is the same as the coding of the emitted pulse sequence, which further improves the anti-interference effect.

### BRIEF DESCRIPTION OF DRAWINGS

The drawings constituting a part of the present disclosure are used to provide a further understanding of the present disclosure. The schematic embodiments and descriptions of the present disclosure are used to explain the present disclosure, and do not constitute improper limitations to the present disclosure. In the drawings:
FIG. 1a illustrates a three-dimensional effect schematic diagram of information points generated by non-random light emission;
FIG. 1b illustrates a two-dimensional effect schematic diagram of information points generated by non-random light emission;
FIG. 2 illustrates a module diagram of a LiDAR according to one embodiment of the present disclosure;
FIG. 3a illustrates a three-dimensional effect schematic diagram of information points generated by random light emission;
FIG. 3b illustrates a two-dimensional effect schematic diagram of information points generated by random light emission;
FIG. 4 illustrates a time sequence diagram of random light emitting time according to Embodiment I of the present disclosure;
FIG. 5 illustrates a time sequence diagram of random light emitting delay according to Embodiment II of the present disclosure;
FIG. 6a illustrates a schematic diagram of interference when lasers emit light sequentially;
FIG. 6b illustrates a schematic diagram of interference with random light emitting sequence according to Embodiment III of the present disclosure;
FIG. 7 illustrates a schematic diagram of the arrangement of a plurality of lasers;
FIG. 8 illustrates a module diagram of a LiDAR according to Embodiment IV of the present disclosure;
FIG. 9 illustrates a module diagram of a LiDAR according to Embodiment V of the present disclosure;
FIG. 10 illustrates a module diagram of a LiDAR according to Embodiment VI of the present disclosure;
FIG. 11 illustrates a time sequence diagram of random light emitting time in combination with a multi-pulse coding according to Embodiment VII of the present disclosure;
FIG. 12 illustrates a time sequence diagram of random light emitting delay in combination with a multi-pulse coding according to Embodiment VIII of the present disclosure;
FIG. 13 illustrates a structural schematic diagram of a driver for multi-pulse coding;
FIG. 14 illustrates a time sequence diagram of switch control signals and a switch trigger signal for multi-pulse coding;
FIG. 15 illustrates a structural schematic diagram of another driver for multi-pulse coding;
FIG. 16 illustrates a flowchart of a ranging method of the present disclosure; and
FIG. 17 illustrates a module diagram of a LiDAR according to one embodiment of the present disclosure.

### DESCRIPTION OF EMBODIMENTS

In the following, only some example embodiments are briefly described. As a person skilled in the art can realize, the described embodiments can be modified in various different ways without departing from the spirit or scope of the present disclosure. Accordingly, the drawings and descriptions are to be regarded as illustrative and not restrictive in nature.

In the description of the present disclosure, it needs to be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the drawings, and are used only for the purpose of facilitating description of the present disclosure and simplification of the description, instead of indicating or suggesting that the denoted devices or elements must be oriented specifically, or configured or operated in a specific orientation. Thus, such terms should not be construed to limit the present disclosure. In addition, such terms as "first" and "second" are only used for the purpose of description, rather than indicating or suggesting relative importance or implicitly indicating the number of the denoted technical features. Accordingly, features defined with "first" and "second" can, expressly or implicitly, include one or more of the features. In the description of the present disclosure, "plurality" means two or more, unless otherwise defined explicitly and specifically.

In the description of the present disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication; or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, this can cover direct contact between the first and second features, or contact via another feature therebetween, other than the direct contact. Furthermore, if a first feature is "on", "above", or "over" a second feature, this can cover the case that the first feature is right above or obliquely above the second feature, or just indicate that the level of the first feature is higher than that of the second feature. If a first feature is "beneath", "below", or "under" a second feature, this can cover the case that the first feature is right below or obliquely below the second feature, or just indicate that the level of the first feature is lower than that of the second feature.

The following disclosure provides various different embodiments or examples so as to realize different structures described herein. In order to simplify the disclosure herein, the following will give the description of the parts and arrangements embodied in specific examples. Of course, these are only for the example purpose, not intended to limit the present disclosure. Besides, the present disclosure can repeat a reference number and/or reference letter in different examples, and such repeat is for the purpose of simplification and clarity, which does not represent any relation among various embodiments and/or arrangements as discussed. In addition, the present disclosure provides examples of various specific processes and materials, but those skilled in the art can also be aware of application of other processes and/or use of other materials.

A multi-beam LiDAR comprises a plurality of lasers and detectors, the plurality of lasers can be arranged along a designated direction (e.g., the vertical direction of the LiDAR), and a plurality of detectors have correspondence with the lasers. After a laser emits detection light, the detector corresponding thereto receives an optical signal. After the detector receives the optical signal, the time of flight of the light can be calculated based on the time of the laser emitting the detection light and the time of the corresponding detector receiving the signal, and then distance information of an object can be obtained. After completion of one emission-and-reception, the next laser emits detection light.

During its operation, a LiDAR rotates around the axis at a certain speed. According to a sampling frequency as set, data collection is carried out after each rotation at a certain angle, thereby collecting information around the LiDAR in the rotation process to achieve perception of the surrounding environment. Moreover, all data points obtained after the LiDAR rotates for one cycle form a frame of point cloud. Taking a mechanically-rotating LiDAR as an example, a plurality of detectors are arranged along the vertical direction of the LiDAR, and different detectors are used for receiving echo signals at different vertical angles. Therefore, for the data points obtained by different detectors, their corresponding vertical angles can be obtained according to the positions of the detectors. The LiDAR can rotate 360° horizontally. When the LiDAR rotates to a certain horizontal angle, a plurality of lasers emits detection light in sequence in a turn-taking way, and the detectors detect optical signals after the corresponding lasers emit the detection light. After all the detectors complete the turn-taking detection, the detection information corresponding to the vertical field of view (FOV) of the LiDAR at that horizontal angle is obtained. After completion of the detection at a horizontal angle, the LiDAR has rotated to another horizontal angle for another turn-taking detection. Therefore, the corresponding horizontal angle difference between two adjacent signal detections by the same detector can be expressed as the horizontal angular resolution of the LiDAR.

In practical detection, the optical signals received by the detectors not only include echo signals of detection light reflected by an object, but may also contain interference signals, especially the detection light emitted from other LiDARs or the reflected light thereof, which form interference points. Interference points can be simply classified into two types: single noise point (which can also be considered as an isolated point) and a plurality of, or even continuous, noise points. A method for filtering out interference points is based on the fact that the interference generated by signals from other LiDARs or interference sources is random and sporadic, that is, the interference points are the spatially isolated points in the point cloud. Then by determining the correlation between data points and other adjacent data points, the isolated points can be identified and filtered out, thereby reducing interference points.

However, when interference points come from other LiDARs, especially when the other LiDARs also have a plurality of lasers and detectors for performing light emission and detection in a turn-taking way, the plurality of detectors of this LiDAR may receive interference signals and generate a plurality of interference points at the same horizontal angle, resulting in a certain correlation existing among these interference points, which can be difficult to be filtered out by the above-mentioned method of determination of spatially isolated points, thus forming noise points in the point cloud.

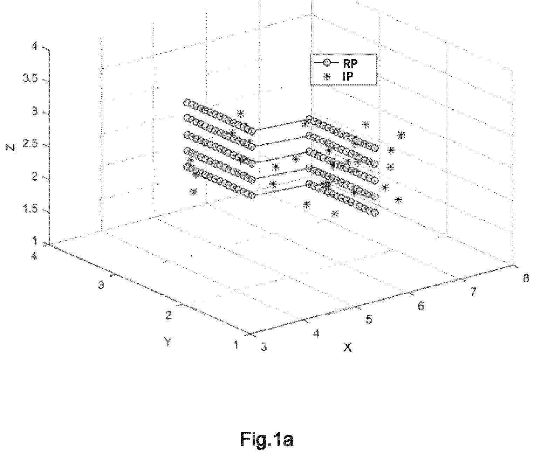

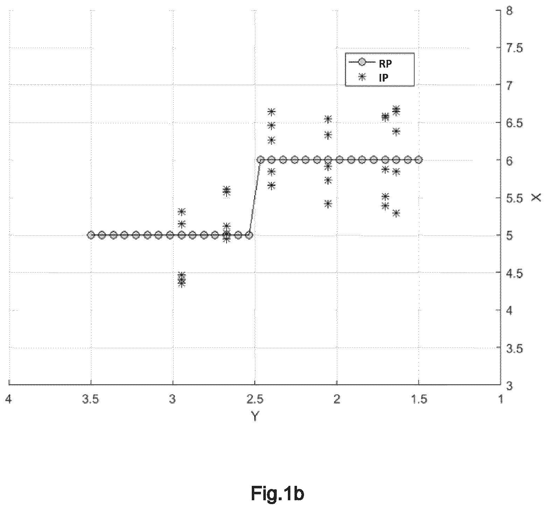

FIGS. 1a and 1b respectively show three-dimensional and two-dimensional effect schematic diagrams of information points generated by non-random light emission, which illustrate the data points obtained by a LiDAR detecting two plate-shaped objects spaced at a certain distance. In FIG. 1a, the Y-axis corresponds to a horizontal detection angle of the LiDAR, the Z-axis corresponds to a vertical detection angle of the LiDAR, and the X-axis corresponds to a distance of the objects obtained through detection. The LiDAR can obtain the three-dimensional point cloud shown in FIG. 1a according to the real-time detection angles of the lasers and the corresponding detectors and the distance information of the objects. FIG. 1b is an X-Y two-dimensional graph of FIG. 1a. The above-mentioned non-random light emission means that the plurality of lasers of the LiDAR emits detection light in sequence at predetermined time intervals, and the light-emitting time interval of two adjacent lasers can be equal. When the LiDAR is not moving, the distance between the LiDAR and the object does not change, and a plurality of data points measured by the plurality of detectors at a plurality of horizontal angles corresponds to the same distance value, forming an array of points regularly distributed in the point cloud. As shown in FIG. 1a, the hollow circles represent data points measured according to true echoes of detection light reflected by the objects (denoted as real points ("RP") in the figure), and the star-like points represent interference points ("IP").

The following analysis will be made based on the ranging principle of a LiDAR. A laser of the LiDAR emits a detection light beam, and a detector is activated within a certain period of time to receive an echo signal. This certain period of time can be determined by a predetermined detection distance of the LiDAR. For example, when the farthest detection distance of the LiDAR is 200 m, time is started from emission of a detection light beam from the laser and the detector is activated, then the detector is deactivated after a period of time (200 m × 2/speed of light) (e.g., the period of time during which the detection light transmits to an object at a distance of 200 m and is reflected there, and an echo signal returns to the LiDAR), and this detection ends. Within the above-mentioned time during which the detector is activated, once an optical signal received exceeds a noise threshold, the system then determines that the optical signal is an echo of the detection light beam reflected by the object, and calculates the time of flight by subtracting the emission time of the detection light from the reception time of the echo to calculate the distance of the object. If an interference signal exceeding the noise threshold is received within the time period during which the detector is activated, a distance of the object can also be calculated according to the reception time of this interference signal, which generates an interference point.

If there is an interfering LiDAR that emits detection light beams in a similar pattern and at similar time intervals to this LiDAR, then during the first detection, an interference signal will be received by the first detector within its activation time, and an interference point will be generated in the first detection. During the second detection, it is also possible for the second detector to receive an interference signal within its activation time which is caused by the next detection light of the interfering LiDAR, and an interference point will also be generated in the detection of the second detector. For the same reason, a plurality of detectors such as the third and fourth detectors adjacent to the first and second detectors may all receive interference signals caused by the detection light emitted by the interfering LiDAR in sequence, and there are interference points in the detection results of the plurality of detectors. The distances corresponding to the plurality of interference points are related to the time intervals of the detection light emitted by the interfering LiDAR. If the turn-taking light emission by the plurality of lasers of this LiDAR is carried out at a fixed emission time interval, and the time intervals of the turn-taking light emission by the plurality of lasers of the interfering LiDAR are also fixed, then the reception time of the interference signals is regular, and the distances of the object calculated therefrom also have a certain regularity, making the interference points have spatial correlation.

With reference to FIG. 1b, when the LiDAR is at a certain horizontal angle (corresponding to the same Y-axis coordinates), all the five detectors shown in the figure receive interference signals, generating consecutive interference points corresponding to the same horizontal and vertical angles. These interference points have relatively small differences in their corresponding distance information, and have relatively strong spatial correlation with each other, which cannot be identified by the method of discriminating spatially isolated points, generating noise points in the point cloud.

Based on the above-mentioned analysis, the present disclosure designs a LiDAR that adopts a scheme of random light emission, so that the spatial correlation of interference points that interfere with the LiDAR is reduced to such an extent that interference points can be identified by an algorithm, and then the interference points are filtered out as an interference signal.

The random light emission according to the present disclosure may comprise various methods: random jitter of emission time of detection light beam by each laser; random selection of the light emitting sequence of the lasers among a plurality of lasers, that is, instead of emitting light in sequence from the first laser to the N^{th} laser following an installation sequence, a laser is randomly selected from N lasers to emit light, and then another laser is randomly selected from the remaining N-1 lasers to emit light next time, or a random sequence is set for N lasers, and the lasers is enabled to emit light in sequence following this random sequence (N is a positive integer, representing the number of lasers installed adjacently); random time intervals between multiple pulses respectively contained in detection light beams emitted from different lasers when each laser emits a detection light beam comprising a plurality of pulses; a combination of two or more of the above-mentioned random methods.

The technical effects of the random light emission scheme of the present disclosure will be analyzed in combination with the above-mentioned non-random light emission scheme. Assuming that a plurality of detectors of this LiDAR receive the same quantity of interference signals, due to the regularity of the emission of the interfering LiDAR, the actual reception time of the interference signals remains unchanged compared with the non-random light emission, but the emission of the detection light beams of this LiDAR has randomness so that two adjacent detectors will not receive interference signals simultaneously. Therefore, the corresponding horizontal and/or vertical angles of a plurality of resulting interference points are not adjacent to each other, and the spatial distances between the interference points increase. Even if two adjacent detectors still receive interference signals simultaneously, due to the random emission time of this LiDAR, the distances of objects calculated according to the interference signals thus have randomness, which can likewise increase the spatial distances between the interference points. Therefore, the detection angles at which the interference points appear in the point cloud and/or the corresponding distances of the interference points also have randomness, reducing the spatial correlation of the interference points and making interference points more evident, so that the interference points can be identified by an algorithm of discrimination of spatially isolated points and then filtered out.

Some embodiments of the present disclosure are introduced below by referring to the drawings. It should be understood that some embodiments described here are only for the purpose of explaining and expounding, instead of limiting the present disclosure.

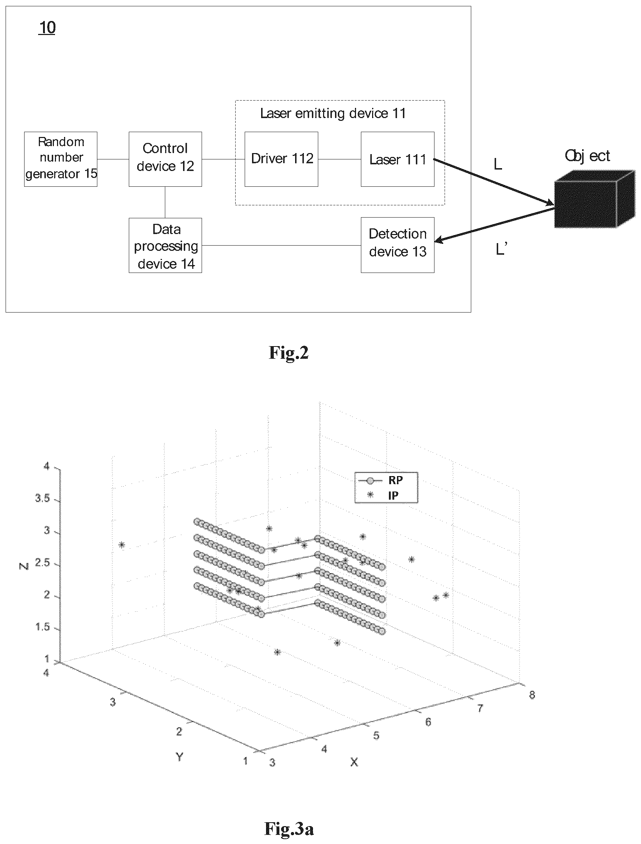

The present disclosure provides a LiDAR 10, as shown in FIG. 2, comprising a laser emitting device 11, a control device 12, a detection device 13, and a data processing device 14.

The laser emitting device 11 comprises a laser 111 and a driver 112 coupled thereto, and is configured to emit laser pulse signals. The laser emitting device 11 comprises at least one laser 111 and a driver 112 corresponding thereto. In the embodiment of FIG. 2, illustrated is a schematic diagram of an embodiment in which the laser emitting device 11 comprises one laser 111, one driver 112, and one random number generator 15. The embodiment in which the laser emitting device 11 comprises a plurality of lasers 111, a plurality of drivers 112, and a plurality of random number generators 15 will be described below in detail. The laser 111 can be, for example, a laser diode (LD), an edge-emitting laser (EEL), or a vertical-cavity-surface-emitting laser (VCSEL). The driver 112 can include, for example, a switch and a voltage source or an energy accumulator. The control device emits a trigger signal to the switch, causing the switch to be ON, and the voltage source or energy accumulator discharges to the laser, thereby driving the laser to emit a laser pulse.

The control device 12 is coupled with the driver 112, and configured to generate a trigger signal based on a time sequence random number, and the driver 112 receives the trigger signal from the control device 12 and drives the coupled laser 111 to emit a laser pulse signal L. The time sequence random number can be a random integer or a random floating-point number, which can correspond to a number in the time domain or a time value. The control device 12 generates a trigger signal according to the time sequence random number and controls, via the driver 112, the laser 111 to emit light randomly to reduce interference. For each laser emitting device 11, the laser emitting device can have one or more predetermined light emitting times. In the present disclosure, the control device 12 randomly adjusts or selects the emitting time of the laser emitting device 11 according to the time sequence random number.

The laser pulse signal L is diffusely reflected on an object, and a part of an echo signal L' returns to the LiDAR 10. The detection device 13 is configured to receive the echo signal L' of the laser pulse signal L reflected by the object and convert the echo signal L' into an electrical signal. The detection device 13 can comprise, for example, an avalanche photodiode (APD), a single photon avalanche diode (SPAD), or other types of photodetectors, which can convert the echo signal into a current signal, a voltage signal, or a digital signal.

The data processing device 14 is configured to determine distance information of the object based on the emission time of the laser pulse signal L and the reception time of the echo signal L'. The data processing device 14 is, for example, coupled with the detection device 13, thereby calculating the reception time of the echo according to the electrical signal. The data processing device 14 is coupled with the control device 12, thereby obtaining a trigger time of the trigger signal as the emission time of the laser pulse signal. Additionally or alternatively, the data processing device 14 can be coupled with the laser emitting device 11, thereby obtaining more precise emission time of the laser pulse signal. These all fall within the scope of protection of the present disclosure. The data processing device 14 can comprise one or more of an analog-to-digital converter ADC, a time-to-digital converter TDC, and a microprocessor.

In the present disclosure, the control device 12 randomly adjusts or selects the emission time of the laser emitting device 11, and the data processing device can obtain the emission time and calculate the time of flight of light in combination with the reception time of the detector's reception of the echo signal, thereby obtaining accurate distance information of the object. The emission time of interference signals does not have the same randomness, and thus the time difference between the reception time of the interference signals and the random emission time of this LiDAR is changing randomly, so that the time differences of a plurality of interference signals and the corresponding distance information of interference points no longer have spatial correlation, and the interference points or interference signals can be identified easily.

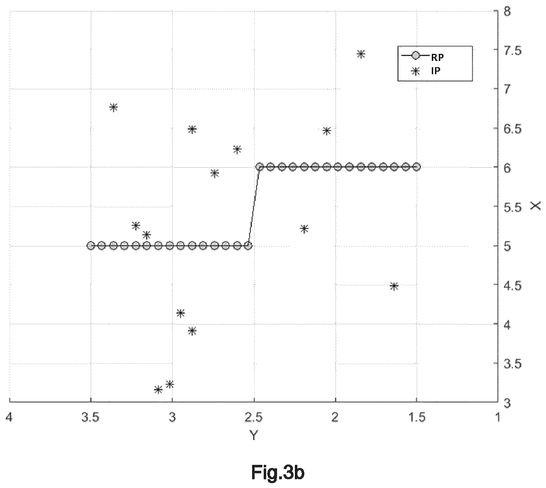

FIGS. 3a and 3b illustrate three-dimensional/two-dimensional effect schematic diagrams of information points generated by random light emission. Similarly, there are data points obtained by the LiDAR detecting two plate-shaped objects spaced at a certain distance. In FIG. 3a, the Y-axis corresponds to a horizontal detection angle of the LiDAR, the Z-axis corresponds to a vertical detection angle of the LiDAR, and the X-axis corresponds to a distance of the objects obtained through detection. The LiDAR can generate the three-dimensional point cloud shown in FIG. 3a according to the real-time detection angles of the lasers and the corresponding detectors and the distance information of the objects. FIG. 3b is an X-Y two-dimensional graph of FIG. 3a. After the scheme of random light emission is adopted, there is no spatial correlation among the interference points generated by the plurality of detectors. As shown in FIG. 3a, the LiDAR emitting light randomly detects two plate-shaped objects to obtain some information points, in which the hollow circles connected by a line represent data points measured according to true echoes of detection light reflected by the objects (denoted as real points in the figure), and the star-like points represent interference points. When the LiDAR is not moving, the distance from the objects does not change, and a plurality of data points measured by the plurality of detectors at a plurality of horizontal angles corresponds to the same distance value, forming an array of points regularly distributed in the point cloud, as shown by the real points in the figure; with reference to FIG. 3b, when the LiDAR is at a certain horizontal angle (corresponding to the same Y-axis coordinate), the plurality of detectors receive interference signals, and because other LiDARs do not adopt the same random light emission strategy, the distance values obtained from the interference points create discrete interference points at horizontal angles and vertical angles. These interference points have relatively large differences in their distance information, and have no spatial correlation with each other, which therefore can be identified as spatially isolated points and filtered out. As can be seen from this, the random light emission solution is adopted, so that the interference points interfering with the LiDAR do not have spatial correlation, and can be calculated and identified, and further filtered out as interference signals.

With continued reference to FIG. 2, according to one embodiment of the present disclosure, the LiDAR 10 further comprises a random number generator 15 configured to generate a time sequence random number, and the control device 12 is coupled to the random number generator 15 to receive the time sequence random number. The random number generator 15 is a pseudo random number generator that generates the time sequence random number by one or more of the following ways: 1) a lookup table method, random sampling is made from a table of a pre-stored set of random numbers ; 2) after the control device 12 emits a trigger signal, the random number generator 15 samples a phase of the system clock and converts the clock phase into a time value as the time sequence random number; 3) the random number generator 15 reads a system temperature and uses a decimal digit of the temperature as a random number seed to generate the time sequence random number; and 4) the random number sequence is generated via a linear feedback shift register (LFSR). Those skilled in the art can understand that only some examples of the generation of the time sequence random number are provided here, and the time sequence random number can also be generated in other ways, all of which fall within the scope of protection of the present disclosure.

In addition, in the embodiment of FIG. 2, the control device 12 and the random number generator 15 are shown as separate components. The present disclosure is not limited to this, and it can also be conceived to integrate the random number generator 15 into the control device 12, or to configure the random number generator 15 not to be a component of the LiDAR 10, but to be located outside the LiDAR 10, all of which fall within the scope of protection of the present disclosure.

Still further, the data processing device 14 can also be configured to calculate the correlation of the plurality of data points and filter out distance information with correlation lower than a predetermined value as an interference signal. As can be seen from this, the random light emission scheme makes the interference points interfering with the LiDAR have no spatial correlation, so that the interference points can be distinguished from real points more easily, which is the first step to reduce interference, and then calculation and discrimination are performed by the data processing device 14, and the interference points are filtered out as interference signals, finally achieving interference reduction. The correlation of the distance information comprises, for example, the distance between each point and an adjacent point in the point cloud, or the average value of distances between each point and a plurality of adjacent points. In the point cloud of the LiDAR obtained according to the present disclosure, since the points generated due to interfering sources are at relatively great distances from the adjacent points and are relatively dispersed, the quantity of interference points thus can be largely eliminated or reduced by setting a distance threshold.

Explained above are the modules of the LiDAR 10, and the implementation of the random light emission scheme will be described next in detail based on some embodiments.

In the present disclosure, the principle of anti-interference through random light emission is that the data processing device 14 of the LiDAR 10 can acquire the actual light emitting time of the laser 111, subtract the actual light emitting time from the reception time of an echo to obtain the time of flight (TOF), and then convert it to obtain the distance information of the object, which is not affected by random changes in light emitting time. For interfering sources (other LiDARs), because the laser pulse emission time is a definite time value, or there is a fixed emission time interval without delay, or because the randomness of delay adopted by the LiDAR 10 is different from that of the interfering sources, after laser pulses emitted from the interfering sources, or echoes of the laser pulses of the interfering sources reflected by one and the same object, are received by the detection device 13 of the LiDAR 10, the corresponding emission time is subtracted to obtain a TOF value, and then the distance information is obtained through conversion, which do not have spatial correlation, and thus can be filtered out as interference points.

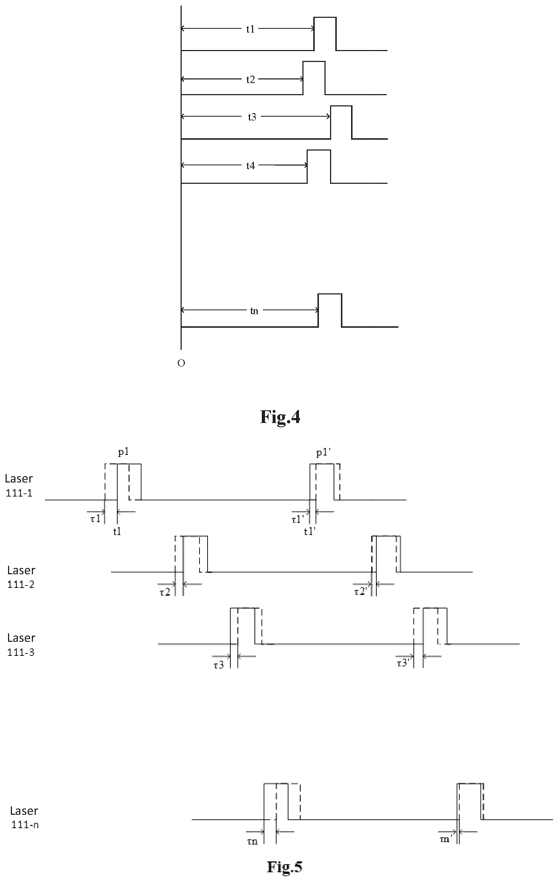

FIG. 4 illustrates a time sequence diagram of random light emitting time according to Embodiment I of the present disclosure. For a laser of the laser emitting device 11, a plurality of light emitting times can be pre-stored in the control device 12, such as a plurality of predetermined light emitting times t1, t2... tn shown in FIG. 4. After receiving a time sequence random number from the random number generator 15, the control device 12 selects, according to the time sequence random number, a light emitting time tx from the plurality of predetermined light emitting times t1, t2... tn as a light emitting time of the laser. The control device 12 emits a trigger signal at the light emitting time tx, and the driver 112 receives the trigger signal and drives the laser 111 coupled thereto to emit a laser pulse signal. For the laser 111, there is randomness of the emitting time of a single laser pulse, because the emission time of a laser pulse is a definite time value in interfering sources (other LiDARs), when the detection device 13 receives two pulse signals, an interference point generated by an interference signal can be easily identified, thereby reducing interference. Optionally, the time sequence random number is an integer between 1 and n. Alternatively, a plurality of predetermined light emitting times t1, t2... tn can be pre-stored in the random number generator 15, and the random number generator generates a random integer x between 1 and n, then selects a predetermined light emitting time tx, and outputs it to the control device 12.

Alternatively, the time sequence random number output by the random number generator 15 is a specific time value. For each laser 111, its light emitting times varies between 0 and tₘₐₓ, and the random number generator 15 is configured to be capable of generating a random floating-point number between 0 and tₘₐₓ as the time sequence random number. After receiving the random floating-point number, the control device 12 emits a trigger signal at the time corresponding to the random floating-point number to drive the laser 111 to emit a laser pulse signal.

Further, tₘₐₓ is determined according to the longest time interval between the light emission by a laser and the activation and detection of a corresponding detector, which corresponds to one detection. For example, the longest detection distance of 200 m corresponds to a time of flight of 1.33 µs, and assuming that a time interval allocated between two consecutive detections is 1.5 µs, then tₘₐₓ will not exceed 0.17 µs to ensure the normal operation of the next detection. The time interval between two consecutive detections can be allocated according to the frame rate, rotational speed, number of lines or resolution of the LiDAR.

In addition, FIG. 4 only illustrates a single pulse signal, which means that a detection light beam only contains one pulse; those skilled in the art can easily understand that a laser pulse signal emitted by the laser can include multiple pulses, which means that a detection light beam contains a plurality of pulses. The plurality of predetermined light emitting times t1, t2... tn shown in FIG. 4 represent the light emitting time of the first pulse emitted by each laser.

FIG. 5 illustrates a time sequence diagram of random light emitting delay according to Embodiment II of the present disclosure. For a laser of the laser emitting device 11, each emission of laser detection pulse has a predetermined light emitting time. In the present disclosure, the random number generator 15 generates a random light emitting delay τ, and the control device 12 applies τ as a delay to the light emitting time of the laser, thereby changing the actual light emitting time of the laser. In the embodiment shown in FIG. 5, each time the laser performs a time-of-flight measurement, for example, the laser emits two detection pulses, by taking the laser 111-1 as an example, the two detection pulses are p1 and p1' respectively, and the predetermined light emitting times of the detection pulses p1 and p1' are t1 and t1' respectively, as shown by the detection pulses shown by the solid line in an emission waveform diagram of the laser 111-1 in FIG. 5. For the detection pulse p1, the control device 12 delays the light emitting time t1 by a random light emitting delay τ1 generated by the random number generator 15. The delay τ1 shown in the figure is a negative value, and thus the light emitting time t1 is actually advanced. Similarly, the control device 12 delays the light emitting time t1' by a random light emitting delay τ1' generates by the random number generator 15. The delay τ1' shown in the figure is a positive value, and thus the light emitting time t1' is actually delayed. For the laser 111-1, the emission times of the two detection pulses thereof are differently advanced and delayed respectively. According to another embodiment of the present disclosure, during one time-of-flight measurement by the same laser, delays of a plurality of detection pulses can also be identical, that is, having the same positive or negative sign and having the same absolute value.

Alternatively, the control device 12 can also pre-store n different delay values τ1, τ2...τn, which can include different positive and negative delay values. The random number generator 15 generates a random integer x within the range of 1-n and outputs x to the control device, the control device selects a delay value τx according to the random integer x and emits a trigger signal at a light emitting time based on the predetermined light emitting time plus the delay τ1, and the corresponding driver 112 receives the trigger signal to drive the laser 111-1 to emit a laser pulse signal, thereby achieving the randomness of the light emitting time through the scheme of random light emitting delay. Still further, the laser emitting device 11 comprises a plurality of lasers 111, such as laser 111-1, laser 111-2, laser 111-3... laser 111-n, each laser 111 has a predetermined light emitting time. The random number generator 15 generates a random light emitting delay τ or a random integer x, according to which the control device 12 determines a delay in the light emitting time of each laser 111. Corresponding to the laser 111-1, the control device 12 emits a trigger signal after the delay τ1 is applied to the predetermined light emitting time, and the corresponding driver 112 receives the trigger signal to drive the laser 111-1 coupled thereto to emit a laser pulse signal; corresponding to the laser 111-2, the control device 12 emits a trigger signal after the delay τ2 is applied to the predetermined light emitting time, and the corresponding driver 112 receives the trigger signal to drive the laser 111-2 coupled thereto to emit a laser pulse signal; corresponding to the laser 111-3, the control device 12 emits a trigger signal after the delay τ3 is applied to the predetermined light emitting time, and the corresponding driver 112 receives the trigger signal to drive the laser 111-3 coupled thereto to emit a laser pulse signal; and so on. The above operation is repeated for the next time-of-flight measurement by each laser. As shown in FIG. 5, the solid-line pulses indicate the predetermined light emitting time, and a delay τ is applied to the predetermined light emitting time so that the actual light emitting time of each laser has randomness. The value of τ can be positive or negative. For example, a positive value represents a delay in the actual light emitting time compared to the predetermined light emitting time, as shown by the first laser pulses of the lasers 111-3 and 111-n in FIG. 5, in which the actual light emitting time represented by the dashed pulses is later than the predetermined light emitting time represented by the solid-line pulses; and a negative value represents an advance in the actual light emitting time compared to the predetermined light emitting time, as shown by the first laser pulses of the lasers 111-1 and 111-2 in FIG. 5, in which the actual light emitting time represented by the dashed pulses is earlier than the predetermined light emitting time represented by the solid-line pulses.

Further, the delay τ reduces the spatial correlation of interference points, and expectably, the greater the value (the absolute value) of this delay τ, the lower the spatial correlation of interference points. In an algorithm of discrimination of isolated points, the distance between each point and an adjacent point in the point cloud, or the average of distances between each point and a plurality of adjacent points can be calculated. By setting a correlation distance threshold, if the distance between a point and an adjacent point is greater than the threshold, the point will be determined as an interference point and filtered out. Therefore, the correlation distance threshold should be greater than the distances between the real data points and less than possible distances between the interference points and the real data points. Within the possible value range of the delay τ, the greater the value of the τ, the larger the spatial distance of the interference points, and the correlation distance threshold can increase accordingly.

In FIG. 5, each laser emits two detection pulses in one time-of-flight measurement. The present disclosure is not limited to this, and each laser can also emit one detection pulse, or emit three or more detection pulses. These all fall within the scope of protection of the present disclosure.

The control device 12 not only can adjust the emitting time of each detection pulse according to the time sequence random number, but also can directly adjust the time interval between two pulses in one detection light beam, which will not be repeated here.

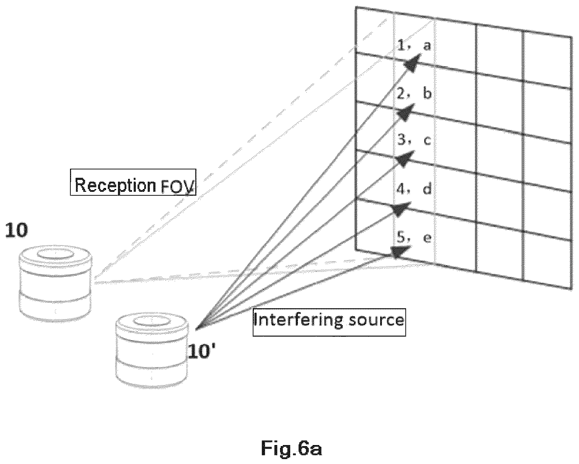

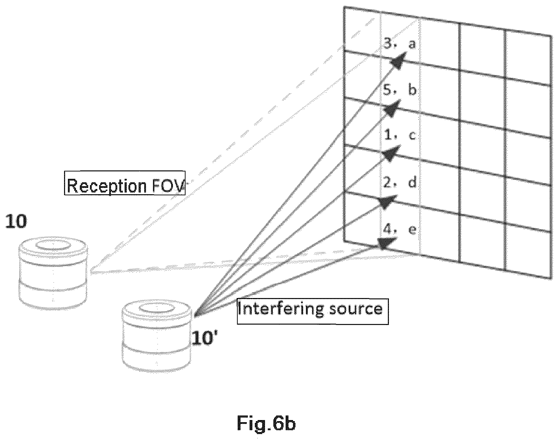

According to another embodiment of the present disclosure, the control device 12 adjusts the light emitting sequence of the plurality of lasers according to the time sequence random number. Detailed description will be made below by referring to FIG. 6.

FIG. 6a illustrates a schematic diagram when lasers emit light sequentially, in which the LiDAR 10 is performing detection, and there is a LiDAR 10' nearby as an interfering source. For the convenience of description, the detection field of view is divided into a two-dimensional grid, where each square represents one sub-field of view, and the horizontal rows and vertical columns of the grid both include a plurality of sub fields of view. For example, the laser emitting device 11 comprises a column of five lasers 111, the detection device 13 comprises a column of five detectors corresponding to the five lasers 111, the five lasers 111 following a predetermined light emitting sequence and their corresponding detectors performing detection in sequence. When the LiDAR 10 performs ranging, the plurality of lasers 111 in the same column emit light in sequence, as in a sequence of 1-2-3-4-5 shown in FIG. 6a, and their corresponding detectors receive the echo in sequence. If there is an interfering source, the LiDAR 10', which emits detection light in a sequence of a-b-c-d-e, the sequences of the detection fields of view of the LiDARs 10 and 10' are consistent. As shown in FIG. 6a, echoes generated by the detection light emitted from the LiDAR 10' can be received by the detectors of the LiDAR 10 in the same sequence, resulting in spatial correlation between a plurality of interference points and real points measured by the detectors of the LiDAR 10, so it is difficult to filter out the interference points.

FIG. 6b illustrates a schematic diagram of interference with random light emitting sequence according to Embodiment III of the present disclosure. When the LiDAR 10 is performing ranging, the plurality of lasers 111 in the same column emits light according to a sequence of 3-5-1-2-4, and their corresponding detectors receive the echo according to the sequence of 3-5-1-2-4. If there is an interfering source, the LiDAR 10', which emits detection light in a sequence of a-b-c-d-e, or reflected light is generated at a certain object, as shown in FIG. 6b, the detection light or reflected light then can be received by the detector 131 in a different sequence, and there will be little spatial correlation among a plurality of interference points measured by the detector 131, so it is easy to filter out the interference points.

Thus, for n lasers, the random number generator 15 can generate one random integer sequence each time, and the control device 12 then controls the n lasers to emit detection pulses according to this random integer sequence.

The random light emitting sequence means that a plurality of lasers emits light in a random sequence, which is equivalent to applying a greater delay to a light emitting time. For example, when an interfering source emits light in a sequence of 1-2-3-4-5, and this LiDAR emits light in a sequence of 3-5-1-2-4, even if an interference signal is received on each detector, the 5^{th} detector of this LiDAR receives an interference signal generated by the 2^{nd} light emission of the interfering source, the 4^{th} detector receives an interference signal generated by the 5^{th} light emission of the interfering source, and the time interval between the 2^{nd} and the 5^{th} light emissions of the interfering source is quite large, so that the difference between the corresponding distances between the two interference points caused by the interference signals received by the adjacent 4^{th} and 5^{th} detectors is also quite large, thereby making the interference points easily exposed as spatially isolated points.

In summary, the random emission schemes comprises four types of randomness: random light emitting time, random light emitting delay, random light emitting sequence, and random light emitting interval. The four schemes can be combined for use. For example, by combining the random light emitting sequence with the random light emitting time, the spatial correlation of the interference points can be further reduced. Those skilled in the art can understand that the random light emission schemes are described above through some embodiments, and any technical solution should fall within the scope of protection of the present disclosure as long as the light emitting time of a laser is controlled based on a time sequence random number.

The module configuration of the LiDAR implementing the above-mentioned random light emission schemes will be described continuously through Embodiment IV/V/VI.

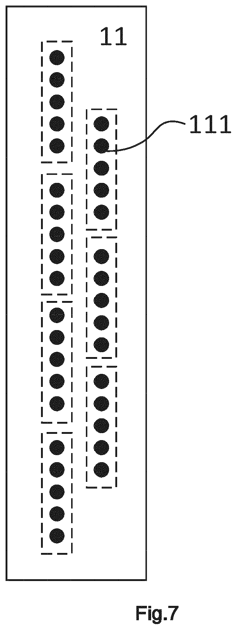

FIG. 7 illustrates a schematic diagram of the arrangement of a plurality of lasers. The laser emitting device 11 comprises a plurality of lasers 111, as shown by the dots in FIG. 7. The plurality of lasers 111 is mounted on one or more circuit boards, and the distribution of different line densities is obtained by setting the number of lasers mounted on the circuit board and the installation position of the circuit board. Each column of lasers can be controlled independently according to the random light emission scheme describe above in the present disclosure; or it is also possible to have all the lasers as a whole, with the light emitting time of each laser is random with respect to the other lasers.

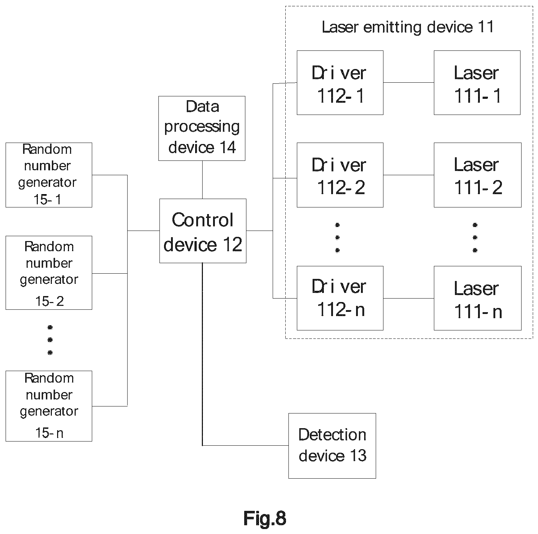

FIG. 8 illustrates a module diagram of a LiDAR according to Embodiment IV of the present disclosure. The laser emitting device 11 comprises a plurality of lasers 111-1, 111-2... 111-n, and drivers 112-1, 112-2... 112-n provided in the same number as the lasers and coupled in one-to-one correspondence to the lasers. In addition, the LiDAR 10 comprises random number generators 15-1, 15-2 ... 15-n provided in the same number as the lasers and corresponding one-by-one to the lasers. In the ranging state of the LiDAR 10, the control device 12 generates one trigger signal based on a time sequence random number generated by a random number generator 15, and its corresponding driver 112 drives the coupled laser 111 according to the trigger signal to emit a laser pulse signal, and so on, finally, each random number generator 15 corresponds to a driver and a laser, which can achieve a random light emitting time, a random light emitting delay, and a random light emitting interval. Still further, the control device 12 can also control the sequence of a plurality of trigger signals based on a plurality of time sequence random numbers, and then the corresponding driver 112 drives the coupled laser 111 to emit light according to a random sequence, which can achieve a random light emitting sequence solution. To further reduce interference, a plurality of random light emission schemes can be combined for use.

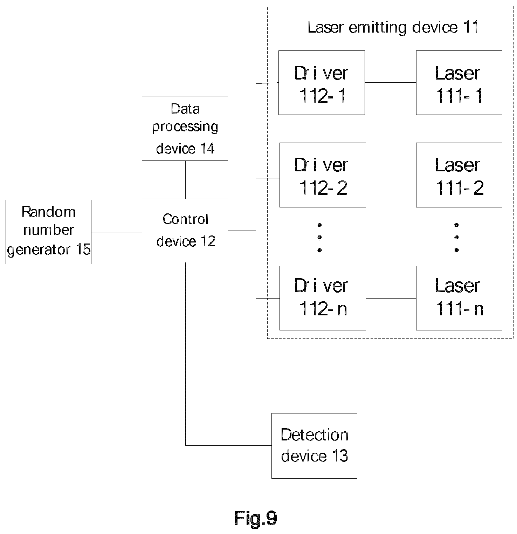

FIG. 9 illustrates a module diagram of a LiDAR according to Embodiment V of the present disclosure. The laser emitting device 11 comprises a plurality of lasers 111-1, 111-2 ... 111-n, and drivers 112-1, 112-2 ... 112-n provided in the same number as the lasers and coupled in one-to-one correspondence to the lasers. In addition, the LiDAR 10 comprises one random number generator 15. In the ranging state of the LiDAR 10, the control device 12 generates a plurality of trigger signals based on a plurality of time sequence random numbers generated by the random number generator 15, and the plurality of drivers 112 drive the coupled lasers 111 according to corresponding trigger signals to emit laser pulse signals, which can achieve any or a combination of four schemes: random light emitting time, random light emitting delay, random light emitting interval, and random light emitting sequence.

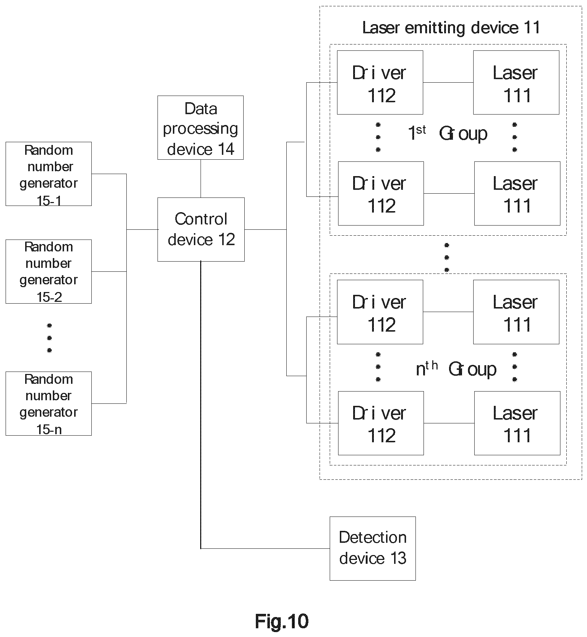

FIG. 10 illustrates a module diagram of a LiDAR according to Embodiment VI of the present disclosure. The laser emitting device 11 comprises a plurality of lasers 111, and drivers 112 provided in the same number as the lasers and coupled in one-to-one correspondence to the lasers 111. The plurality of lasers 111 and drivers 112 are grouped, for example, a column of lasers 111 and their corresponding drivers 112 as shown in FIG. 7 are classified into one group (the dashed box shown in FIG. 7 is one group), and the first group ... and the n^{th} group as shown in FIG. 10. The correlation of information points measured by the lasers 111 in each group is relatively high, so that each group of lasers can be controlled independently. The LiDAR 10 comprises a plurality of random number generators 15 corresponding to the number of groups, and a time sequence random number generated by each random number generator 15 corresponds to a group of lasers 111 and drivers 112, which can achieve any or a combination of the four schemes: random light emitting time, random light emitting delay, random light emitting interval, and random light emitting sequence.

The random light emission schemes have been introduced above through the six embodiments, which make the interference points interfering with the LiDAR to have no spatial correlation, thereby making it easy to distinguish and filter out interference signals. To further improve the anti-interference effect, the random light emission schemes can also be combined with a multi-pulse coding scheme to identify an echo signal by determining whether the coding of the echo signal is the same as the coding of the transmitted pulse sequence.

The random light emission scheme and the multi-pulse coding scheme will be described continuously through Embodiments VII and VIII.

According to one some embodiments of the present disclosure, the control device 12 is further configured to control the driver 112 to drive the coupled laser 111 to emit a laser pulse sequence with a multi-pulse coding, the multi-pulse coding comprises time sequence coding, amplitude coding, and/or pulse width coding.

Specifically, the detection light emitted by the laser 111 is a pulse sequence comprising N pulses, where N is an integer equal to or greater than 2, i.e., multiple pulses.

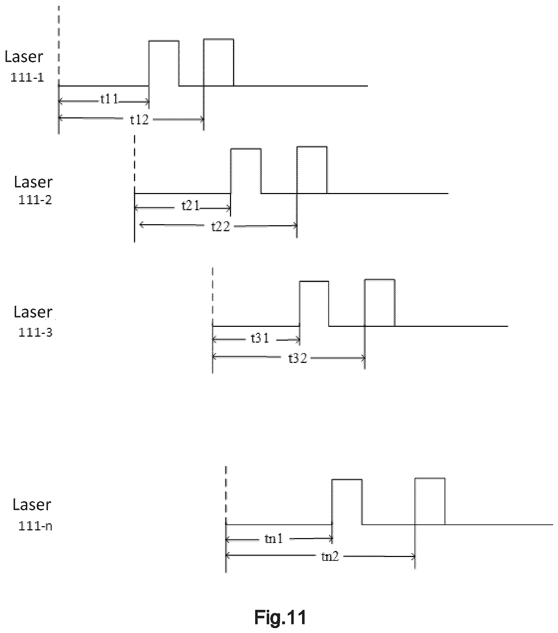

FIG. 11 illustrates a time sequence diagram of random light emitting time in combination with a multi-pulse coding according to Embodiment VII of the present disclosure. Taking N=2, i.e., double pulses, as an example, for the laser 111-1, the random number generator 15 generates two time sequence random numbers: t11 and 112, where t 11 is the random light emitting time of the first pulse and 112 is the random light emitting time of the second pulse. Both t11 and 112 are random numbers, such that the time interval t12-t11 of the double pulses is also random. Similarly, the light emitting times t21 and t22 of the two pulses of the laser 111-2 ... the light emitting times tn1 and tn2 of the two pulses of the laser 111-n are all random numbers, and the time intervals of the double pulses satisfy the following: 112-111 ≠ t22-t21 ≠ t32-t31 ≠ ... # tn2-tn1. When N>2, the laser pulse sequence contains a plurality of laser pulses, such as the first pulse, the second pulse... and the N^{th} pulse. The light emitting times of the plurality of laser pulses are all based on the time sequence random number, making the time interval between the leading edges of the plurality of pulses random. Similarly, the random light emitting interval scheme can be directly used to configure the time interval of the plurality of pulses, which can achieve the same random effect. The difference from adopting the random light emitting time scheme alone is that the data processing device 14 can identify an echo signal according to the time sequence coding.

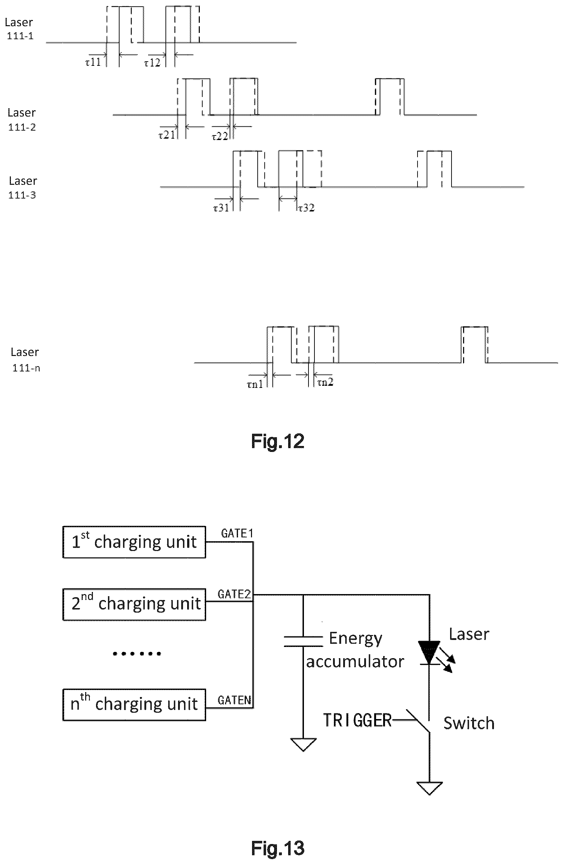

FIG. 12 illustrates a time sequence diagram of the random light emitting delay in combination with a multi-pulse coding according to Embodiment VIII of the present disclosure, which adopts a fixed light emitting interval plus a random time jitter. Taking double pulses as an example, fixed light emitting times of two pulses are set for each laser 111, and a random delay τ is applied to both light emitting times, so that the leading edge of the first pulse is made random, that is, the light emitting time is randomized; and the interval between the leading edges of the second pulse and the first pulse is also random, that is, the pulse time sequence interval is coded. This is another implementation solution of the multi-pulse coding based on time sequence coding, and the data processing device 14 can identify an echo signal according to time sequence coding.

The above-mentioned coding is a laser pulse sequence that has an interval in a time sequence, which can be referred to as a time sequence coding. Meanwhile, it can also be a pulse sequence that has undergone pulse intensity modulation in time sequence, which can be referred to as amplitude coding, or a combination of two coding schemes, that is, a pulse sequence that has an interval and has undergone pulse intensity modulation in a time sequence. Moreover, pulse width coding can be achieved by changing the pulse width based on time sequence random number. By combining these three coding schemes, the time interval of multiple pulses, the width of each pulse, and the amplitude of each pulse can be randomized, so that the data processing device 14 can identify an echo signal more easily. Specifically, in a laser emitting device 11 adopting multi-pulse coding, the coding of the emitted pulse is taken as the first coding. After the detection device 13 receives an echo, the data processing device 14 obtains a second coding of the echo pulse sequence, and determines whether the second coding is the same as the first coding. When the second coding is the same as the first coding, the echo is treated as an echo signal of a coded pulse sequence. Due to the randomness of the coding of the emitted pulse, it becomes easy to identify echo pulses and filter out interference, thereby improving the anti-interference effect.

The amplitude coding and pulse width coding of the multi-pulse coding are mainly implemented based on a driver as further described below.

FIG. 13 illustrates a structural schematic diagram of a driver for the multi-pulse coding, the driver comprising a plurality of charging units and an energy accumulator. When a switch trigger signal TRIGGER controls a switch to be OFF, the charging units, in sequence, charge the energy accumulator under the control of switch control signals GATE1, GATE2 ... GATEN. After charging, the switch trigger signal TRIGGER controls the switch to ON, and the energy accumulator begins to discharge to enable the laser to emit a laser pulse.

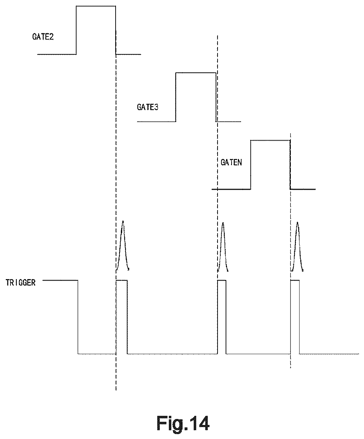

FIG. 14 illustrates a time sequence diagram of control signals and a switch trigger signal for the multi-pulse coding, a switch trigger signal TRIGGER is triggered at the end of the switch control signals GATE1, GATE2 ... GATEN. For example, the time sequence trailing edges of the switch control signals GATE1, GATE2 ... GATEN shown in FIG. 14 trigger the trailing edge of the switch trigger signal TRIGGER; if the end of the switch trigger signal TRIGGER is the rising edge of a time sequence signal, then this rising edge is used as a trigger time for the switch control signal to ensure that the emission process starts after the end of charging, and the next charging-emission process can start immediately after the end of the previous charging-emission process.

In FIG. 14, the time widths of the switch control signals GATE1, GATE2, ... GATEN are equal, thus ensuring that the pulse widths in the emitted pulse sequence are substantially consistent. In addition, control of the intensity of the emitted pulse can be achieved by controlling the widths of the switch control signals in different pulse sequences. For example, if the switch control signal GATE1 and the switch control signal GATE2 have different signal durations, then an amount of electricity charged into the energy accumulator will also be different, further resulting in different intensities of individual pulses as emitted. According to different durations of the switch control signals, control of the emitted pulse width can be achieved, further distinguishing an echo signal and avoiding interferences between different emission signal sequences.

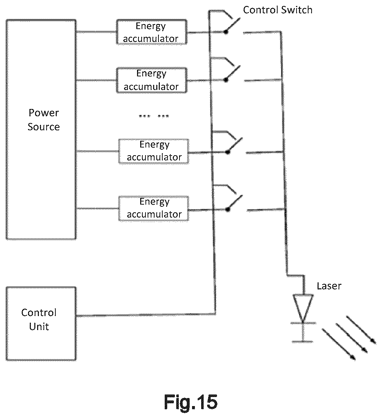

FIG. 15 illustrates a structural schematic diagram of another driver for multi-pulse coding, a plurality of energy accumulators are connected to a power source, each energy accumulator is connected to a control switch responsible for controlling the connection and disconnection between the energy accumulator and a laser. When the control switch between a certain energy accumulator and the laser is off, the charge stored in the energy accumulator drives the laser to emit a laser pulse.

The various units in FIG. 15 are independent of each other, and the control switch is independently controlled by the control unit. At the same time in a time sequence, the control unit can control the control switch to be on or off independently. When a plurality of control switches are turned off at the same time, the energy of the emitted laser pulses is the sum of the energy of several energy accumulators. By simultaneously closing a plurality of control switches at the same time to emit high-energy pulses, detection of a remote object can be achieved. By controlling the number of control switches that are turned off in the time sequence and the time, the shape of the emitted pulses in the time sequence can be controlled. For example, at a certain time, when only one control switch is off, the intensity of the pulse emitted at that time is 1 unit, while at a subsequent time when N control switches are off, the intensity of the pulses emitted at that time is N units. By controlling the number of switches that are turned off at different times by the control unit, the time sequence and intensity of the emitted pulse can be controlled.

In summary, coding of the time sequence, amplitude, and pulse width of laser pulses can be achieved by controlling the driver. By determining whether the coding of the echo is the same as that of the emitted laser pulse sequence, echo signals are identified, which further improves the anti-interference effect.

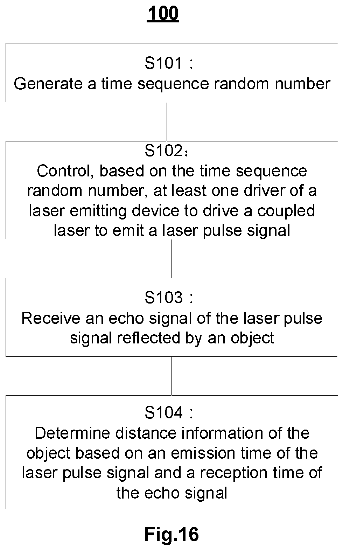

The present disclosure further provides a ranging method 100, as shown in FIG. 16, the method comprising: step S101: generating a time sequence random number; step S102: controlling, based on the time sequence random number, at least one driver of a laser emitting device to drive a coupled laser to emit a laser pulse signal; step S103: receiving an echo signal of the laser pulse signal reflected by an object; and step S104: determining distance information of the object based on an emission time of the laser pulse signal and a reception time of the echo signal.

According to one aspect of the present disclosure, the method further comprises: calculating correlation of a plurality of distance information, and determining distance information with correlation lower than a predetermined value as an interference signal.

According to one aspect of the present disclosure, the step S102 comprises: controlling the emission time of the laser pulse signal emitted by the laser, and/or controlling a time interval between consecutive laser pulses, based on the time sequence random number.

According to one aspect of the present disclosure, the step S102 comprises: controlling a light emitting sequence of the plurality of lasers based on the time sequence random number.

According to one aspect of the present disclosure, the step S102 comprises: generating a time sequence random number: through random sampling from a pre-stored random number table; based on a clock phase; based on a system temperature; and by a linear feedback shift register.

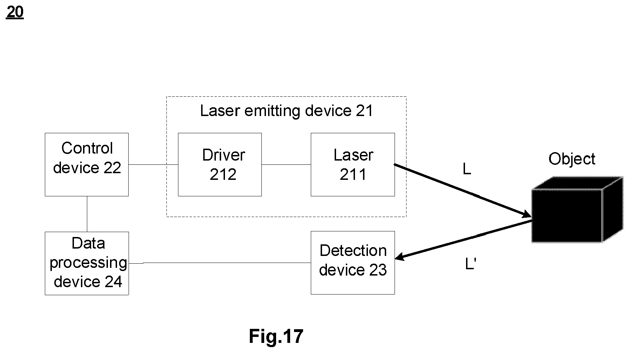

The present disclosure further provides a LiDAR 20, as shown in FIG. 17, comprising a laser emitting device 21, a control device 22, a detection device 23, and a data processing device 24, the control device 22 is configured to generate a trigger signal based on a time sequence random number; the laser emitting device 21 comprises at least one laser 211, and a driver 212 coupled with the laser 211, the driver 212 is configured to drive the laser 211 to emit a laser pulse signal according to the trigger signal; the detection device 23 is configured to receive an echo signal of the laser pulse signal reflected by an object, and convert the echo signal into an electrical signal; and the data processing device 24 determines distance information of the object based on an emission time of the laser pulse signal and a reception time of the echo signal, the laser pulse signal is a laser pulse sequence with a multi-pulse coding, the multi-pulse coding comprising time sequence coding, amplitude coding, and/or pulse width coding.

Last but not least, it should be noted that described above are just some embodiments of the present disclosure, which are not intended to limit the present disclosure. Although the detailed description of the present disclosure has been provided by referring to the above-mentioned embodiments, those skilled in the art may still make modifications to the technical solution as recited in each of the above-mentioned embodiments, or perform equivalent substitutions of some technical features thereof. Any modification, equivalent substitution, improvement, etc. as made, if just falling within the spirit and principle of the present disclosure, should be included in the scope of protection thereof.

## Claims

1. A LiDAR, comprising: a laser emitting device, a control device, a detection device and a data processing device, wherein
the control device is configured to generate a trigger signal based on a time sequence random number;
the laser emitting device comprises at least one laser and a driver coupled with the laser, the driver is configured to drive the laser to emit a laser pulse signal according to the trigger signal;
the detection device is configured to receive an echo signal of the laser pulse signal reflected by an object and convert the echo signal into an electrical signal; and
the data processing device is configured to determine distance information of the object based on an emission time of the laser pulse signal and a reception time of the echo signal.

2. The LiDAR of claim 1, further comprising a random number generator configured to generate the time sequence random number, the control device is coupled to the random number generator to receive the time sequence random number.

3. The LiDAR of claim 1, wherein the data processing device is configured to calculate a correlation of a plurality of distance information and to filter out distance information with a correlation lower than a predetermined value as an interference signal.

4. The LiDAR of claim 2, wherein the laser has a plurality of predetermined light emitting times, and the control device is configured to select, according to the time sequence random number, one light emitting time from the plurality of predetermined light emitting times as a trigger time for the drive signal.

5. The LiDAR of claim 2, wherein the laser has one predetermined light emitting time, and the control device is configured to delay or advance, according to the time sequence random number, the predetermined light emitting time as a trigger time for the drive signal.

6. The LiDAR of claim 2, wherein the laser is configured to emit a plurality of pulses, and the control device is configured to adjust, according to the time sequence random number, a time interval between trigger signals corresponding to two adjacent pulses.

7. The LiDAR of any one of claims 2-6, wherein the laser emitting device comprises a plurality of lasers and a plurality of drivers, a number of the plurality of lasers is equal to a number of the plurality of drivers, and the LiDAR comprises a plurality of random number generators, and a number of the plurality of random number generators is equal to the number of the plurality of lasers.

8. The LiDAR of any one of claims 2-6, wherein the laser emitting device comprises a plurality of lasers and a plurality of drivers each coupled with a respective laser, the control device is coupled with the plurality of drivers, and the time sequence random number corresponds to a light emitting sequence of the plurality of lasers.

9. The LiDAR of any one of claims 2-6, wherein the laser emitting device comprises multiple groups of lasers, each group of lasers comprising a plurality of lasers and a plurality of drivers each coupled with a respective laser, and the LiDAR further comprises a plurality of random number generators corresponding to the multiple groups of lasers,for each random number generator, time sequence random numbers generated by the random number generator correspond to a light emitting sequence of a group of lasers corresponding to the random number generator.

10. The LiDAR of any one of claims 2-6, wherein the control device is further configured to control the driver to drive the laser to emit a laser pulse sequence with a multi-pulse coding, the multi-pulse coding comprising time sequence coding, amplitude coding, and/or pulse width coding.

11. The LiDAR of any one of claims 2-6, wherein the random number generator is a pseudorandom number generator, and generates the time sequence random number by one or more of the following ways:
random sampling from a pre-stored random number table;
generation based on a clock phase;
generation based on a system temperature; and
generation based on a linear feedback shift register.

12. A ranging method comprising:
S101: generating a time sequence random number;
S102: controlling, based on the time sequence random number, at least one driver of a laser emitting device to drive a coupled laser to emit a laser pulse signal;
S103: receiving an echo signal of the laser pulse signal reflected by an object; and
S104: determining distance information of the object based on an emission time of the laser pulse signal and a reception time of the echo signal.

13. The ranging method of claim 12, further comprising: calculating correlation of a plurality of distance information, and determining distance information with correlation lower than a predetermined value as an interference signal.

14. The ranging method of claim 12, wherein the step S102 comprises: controlling the emission time of the laser pulse signal emitted by the laser, and/or controlling a time interval between adjacent laser pulses, based on the time sequence random number.

15. The ranging method of any one of claims 12-14, wherein the step S102 comprises: controlling a light emitting sequence of a plurality of lasers based on the time sequence random number.

16. The method of any one of claims 12-14, wherein the step S102 comprises: generating a time sequence random number by one or more of the following ways:
random sampling from a pre-stored random number table;
generation based on a clock phase;
generation based on a system temperature; and
generation based on a linear feedback shift register.

17. A LiDAR, comprising a laser emitting device, a control device, a detection device, and a data processing device, wherein
the control device is configured to generate a trigger signal based on a time sequence random number;
the laser emitting device comprises at least one laser and a driver coupled with the laser, the driver is configured to drive the laser to emit a laser pulse signal according to the trigger signal;
the detection device is configured to receive an echo signal of the laser pulse signal reflected by an object, and convert the echo signal into an electrical signal; and
the data processing device determines distance information of the object based on an emission time of the laser pulse signal and a reception time of the echo signal,
the laser pulse signal is a laser pulse sequence with a multi-pulse coding, the multi-pulse coding comprising time sequence coding, amplitude coding, and/or pulse width coding.
